# EUROPEAN PATENT SPECIFICATION

(11) **EP 3 148 274 B1**
(45) Date of publication and mention of the grant of the patent: **09.10.2019**
(21) Application number: 14897129.4
(22) Date of filing: 17.06.2014
(51) Int. Cl.: H04W 74/08, H04W 84/12

(54) **INFORMATION TRANSMITTING METHOD, ACCESS POINT AND STATION**
INFORMATIONSÜBERTRAGUNGSVERFAHREN, ZUGANGSPUNKT UND STATION
PROCÉDÉ DE TRANSMISSION D'INFORMATIONS, POINT D'ACCÈS ET STATION

(43) Date of publication of application: 29.03.2017
(73) Proprietor: Huawei Technologies Co., Ltd., Longgang District Shenzhen, Guangdong 518129 (CN)
(72) Inventor: PANG, Jiyong, Shenzhen Guangdong 518129 (CN); LUO, Jun, Shenzhen Guangdong 518129 (CN); MA, Chixiang, Shenzhen Guangdong 518129 (CN)
(74) Representative: Goddar, Heinz J.
(86) International application number: PCT/CN2014/080088
(87) International publication number: WO 2016/004557

(56) References cited:
- WO-A1-2014/071308
- CN-A- 101 018 362
- CN-A- 101 697 637
- CN-A- 103 442 445
- US-A1- 2011 110 351
- US-A1- 2011 235 576
- US-A1- 2011 249 659
- US-A1- 2013 286 959

## Description

### TECHNICAL FIELD

The present invention relates to the field of wireless communications technologies, and more specifically, to an information transmission method, an access point, and a station.

### BACKGROUND

With development of the mobile Internet and popularization of intelligent terminals, data traffic grows rapidly. With advantages of a high rate and low costs, a wireless local area network (WLAN) becomes one of mainstream mobile broadband access technologies.

To greatly improve a service transmission rate of a WLAN system, in a next generation Institute of Electrical and Electronics Engineers (IEEE) 802.11 ax standard, based on an existing orthogonal frequency division multiplexing (OFDM) technology, an orthogonal frequency division multiple access (OFDMA) technology will be further used. In the OFDMA technology, radio channel time-frequency resources of an air interface are divided into multiple orthogonal time-frequency resource blocks (RB, Resource Block). The RBs can be shared in terms of time and are orthogonal in a frequency domain. The OFDMA technology supports sending and receiving data by multiple nodes at the same time.

When an access point needs to transmit data to a station, the access point allocates a resource based on an RB or an RB group. However, the access point may select a resource whose state is busy to transmit data. In this case, a data transmission collision occurs. US 2011/0235576 A1 discloses a method and apparatus, according to which a multi-channel request-to-sent (MRTS) is transmitted from a first device to a second device in a wireless communication network, the MRTS including a first indication of which of multiple channels were sensed by the first device as being free; a multi-channel clear-to-send (MCTS) is received from the second device, the MCTS including a second indication of which of the multiple channels indicated by the first indication were sensed by the second device as being free; and a message is transmitted to the second device using one or more of the channels indicated by the second indication. In order to determine whether a channel is "free", the amount of electromagnetic energy sensed on the channel can be monitored. According to this prior art, both devices independently search for free channels, but the MRTS and MCTS messages are exchanged to resolve discrepancies in the determination of free channels, which may e.g. arise due to the so-called hidden node problem, which may occur if a receiver at the edge of the current network is able to hear signals from a device in a neighboring network that are not strong enough to reach a transmitter of the current network. US 2011/0110351 A1 discloses a channel access method, in which a CTS frame may include a subchannel list for indicating a specific subchannel for which each VHT STA has a transmission opportunity.

### SUMMARY

Embodiments of the present invention provide an information transmission method, an access point, and a station, which can reduce a data transmission collision possibility.

According to a first aspect, an access point of a wireless local area network is provided, where an OFDMA time-frequency channel resource of the wireless local area network is divided into multiple child resources in a frequency domain, said child resources corresponding to orthogonal time-frequency resource blocks or resource block groups, wherein resource blocks are orthogonal in frequency and can be shared in time, and the access point includes: a receiving unit, configured to receive resource status information sent by a station, where the resource status information indicates a busy/idle state of each of the child resources on the station; and an allocation unit, configured to allocate, according to the resource status information, the child resource used to transmit data between the access point and the station. The access point further comprises a sending unit, configured to send configuration information of the resource status information to the station, said configuration information including resource block group granularity indication information, wherein the resource block group granularity indication information indicates the number of resource blocks included by a resource block group, wherein the configuration information is used to instruct the station to determine the resource status information according to the configuration information.

According to a second aspect, a station of a wireless local area network is provided, where an OFDMA time-frequency channel resource of the wireless local area network is divided into multiple child resources in a frequency domain, said child resources corresponding to orthogonal time-frequency resource blocks or resource block groups, wherein resource blocks are orthogonal in frequency and can be shared in time, and the station includes: a determining unit, configured to determine resource status information, where the resource status information indicates a busy/idle state of each of the child resources on the station; and a sending unit, configured to send the resource status information to the access point, so that the access point allocates, according to the resource status information, the child resource used to transmit data between the access point and the station. The station further comprises a receiving unit, configured to receive configuration information that is of the resource status information and sent by the access point, said configuration information including resource block group granularity indication information, wherein the resource block group granularity information indication indicates the number of resource blocks included by a resource block group, wherein the configuration information is used to instruct the station to determine the resource status information according to the configuration information.

According to a third aspect, a method for transmitting information by using a wireless local area network is provided, where an OFDMA time-frequency channel resource of the wireless local area network is divided into multiple child resources in a frequency domain, said child resources corresponding to orthogonal time-frequency resource blocks or resource block groups, wherein resource blocks are orthogonal in frequency and can be shared in time, and the method includes: receiving, by an access point, resource status information sent by a station, where the resource status information indicates a busy/idle state of each of the child resources on the station; and allocating, by the access point according to the resource status information, the child resource used to transmit data between the access point and the station. Before the receiving, by an access point, resource status information sent by a station, the method further comprises sending, by the access point, configuration information of the resource status information to the station, said configuration information including resource block group granularity indication information, wherein the resource block group granularity indication information indicates the number of resource blocks included by a resource block group, wherein the configuration information is used to instruct the station to determine the resource status information according to the configuration information.

According to a fourth aspect, a method for transmitting information by using a wireless local area network is provided, where an OFDMA time-frequency channel resource of the wireless local area network is divided into multiple child resources in a frequency domain, said child resources corresponding to orthogonal time-frequency resource blocks or resource block groups, wherein resource blocks are orthogonal in frequency and can be shared in time, and the method includes: determining, by a station, resource status information, where the resource status information indicates a busy/idle state of each of the child resources on the station; and sending, by the station, the resource status information to the access point, so that the access point allocates, according to the resource status information, the child resource used to transmit data between the access point and the station. Before the determining, by a station, resource status information, the method further comprises receiving, by the station, configuration information that is of the resource status information and sent by the access point, said configuration information including resource block group granularity indication information, wherein the resource block group granularity indication information indicates the number of resource blocks included by a resource block group, wherein the configuration information is used to instruct the station to determine the resource status information according to the configuration information.

In the embodiments of the present invention, a station sends resource status information to an access point, so as to report a busy/idle state of a child resource on the station to the access point. In this way, the access point can allocate, according to the busy/idle state of a child resource on the station, an appropriate resource for data transmission, thereby reducing a data transmission collision possibility.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and persons of ordinary skill in the art may still derive other drawings from these accompanying drawings without creative efforts.
FIG. 1 is a schematic diagram of a system architecture applicable to an embodiment of the present invention;
FIG. 2 is a block diagram of an access point according to an embodiment of the present invention;
FIG. 3 is a schematic diagram of a clear-to-send frame according to an embodiment of the present invention;
FIG. 4 is a schematic diagram of resource status information according to an embodiment of the present invention;
FIG. 5 is a schematic diagram of resource status information according to another embodiment of the present invention;
FIG. 6 is a block diagram of a station according to an embodiment of the present invention;
FIG. 7 is a schematic flowchart of an information transmission method according to an embodiment of the present invention;
FIG. 8 is a schematic flowchart of an information transmission method according to another embodiment of the present invention;
FIG. 9 is a schematic flowchart of a process of an information transmission method according to an embodiment of the present invention;
FIG. 10 is a block diagram of an access point according to another embodiment of the present invention; and
FIG. 11 is a block diagram of a station according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

Technical solutions of the present invention may be applied in various wireless communications systems, such as systems based on Wireless Fidelity (WIFI), Bluetooth, Worldwide Interoperability for Microwave Access (WiMAX), and Wireless LAN Authentication and Privacy Infrastructure (WAPI), and another communications system that interconnects terminals in a wireless manner.

An access point (AP) may also be referred to as a wireless access point, a bridge, a hotspot, or the like, and the access point can access a server or a communications network.

A station (STA) may be a wireless sensor, a wireless communications terminal, or a mobile terminal, such as a mobile phone (also referred to as a "cellular" phone) supporting a WiFi communication function and a computer with a wireless communication function. For example, the station may be a portable, pocket-sized, handheld, computer-built-in, or vehicle-mounted wireless communications apparatus that supports a WiFi communication function, and the wireless communications apparatus exchanges voice and/or data with a radio access network.

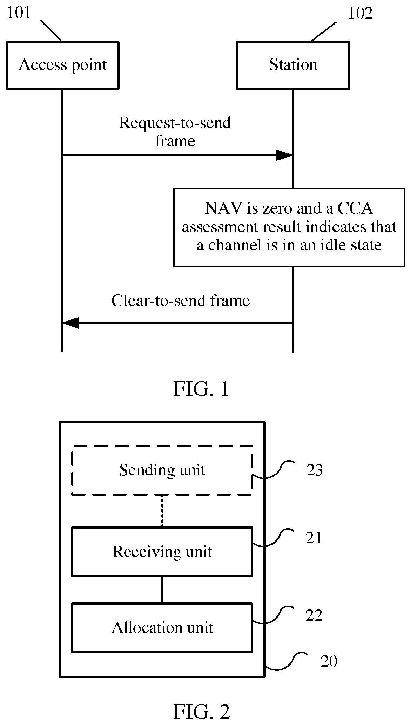

FIG. 1 is a schematic diagram of a system architecture applicable to an embodiment of the present invention.

A system in FIG. 1 includes an access point 101 and a station 102. For a WLAN system, the station 102 can perform clear assessment on a channel resource used for data transmission between the access point 101 and the station 102, and an existing clear channel assessment (CCA) method can be used for the clear assessment.

As shown in FIG. 1, when needing to transmit data to the station 102, the access point 101 may send a request-to-send (RTS, Request To Send) frame to the station 102. The request-to-send frame is used to request to transmit data to the station 102. After the station 102 receives the request-to-send frame sent by the access point 101, if a network allocation vector (NAV, Net Allocation Vector) of the station 102 is zero and a CCA assessment result indicates that a channel is in an idle state, the station 102 may send a clear to send (CTS, Clear To Send) frame to the access point 101. The clear-to-send frame is used to feed back, to the access point 101, that the access point 101 is allowed to transmit data.

When the CCA assessment result is greater than a specified threshold, it may be considered that the channel is in a busy state; or when the CCA assessment result is not greater than a specified threshold, it may be considered that the channel is in an idle state. When the channel is in an idle state, it indicates that average antenna port energy or average received signal strength of the station on overall time-frequency resources of the channel is less than the specified threshold. For a WLAN system based on an OFDM technology, when a state of a channel after CCA is idle, it does not represent that a state of any part of time-frequency resources corresponding to the channel is idle. For a WLAN system based on an OFDMA technology, when a state of a channel after CCA is idle, it does not represent that a state of any resource block or resource block group of time-frequency resources corresponding to the channel is idle.

In this embodiment of the present invention, the station may feed back resource status information (RSI, Resource Status Information) to the access point. The RSI indicates a busy/idle state of any part (which may be referred to as a "child resource") of time-frequency resources corresponding to the channel. For example, the station may further feed back the RSI to the access point when the CCA assessment result indicates that the state of the channel is idle and the NAV of the station is zero. In this way, after learning the busy/idle state of a child resource, the access point may perform resource allocation with a smaller granularity, so as to implement flexible channel resource allocation.

FIG. 2 is a block diagram of an access point of a wireless local area network according to an embodiment of the present invention. A channel resource of the wireless local area network is divided into multiple child resources in a frequency domain. As shown in FIG. 2, the access point 20 may include a receiving unit 21 and an allocation unit 22.

The receiving unit 21 is configured to receive resource status information sent by a station, where the resource status information indicates a busy/idle state of each child resource on the station.

The allocation unit 22 is configured to allocate, according to the resource status information, the child resource used to transmit data between the access point and the station.

In this embodiment of the present invention, a station sends resource status information to an access point, so as to report a busy/idle state of a child resource on the station to the access point. In this way, the access point can allocate, according to the busy/idle state of a child resource on the station, an appropriate resource for data transmission, thereby reducing a data transmission collision possibility.

It should be understood that each child resource may occupy a symbol in a time domain, or may also occupy one or more subcarriers in a frequency domain. The resource status information may correspond to a busy/idle state of a child resource. For example, busy/idle states of all child resources of a channel resource corresponding to a station may correspond to a piece of resource status information. In this way, multiple stations may correspond to multiple pieces of resource status information.

Optionally, there may be multiple stations in this embodiment of the present invention, and each station corresponds to a piece of resource status information. The multiple stations may separately determine resource status information and send corresponding multiple pieces of resource status information to the access point 20, so that the receiving unit 21 of the access point 20 obtains busy/idle states of all child resources of a channel resource corresponding to each station.

Optionally, a representation form of the child resource is not limited in this embodiment of the present invention. The channel resource can be divided into multiple child resources, and the child resources can represent any part of the channel resource. For a WLAN system based on an OFDMA technology, the channel resource is divided into multiple orthogonal resource blocks (RB, Resource Block). In this case, the child resource may be a resource block. If the resource blocks are grouped into a form of resource block groups (RBG, Resource Block Group), the child resource may be a resource block group. For a WLAN system based on an OFDM technology, the channel resource may be divided, in a simulation manner, into multiple simulative resource blocks or simulative resource block groups.

Optionally, in another embodiment, the access point 20 further includes a sending unit 23. The sending unit 23 is configured to send configuration information of the resource status information to the station, where the configuration information is used to instruct the station to determine the resource status information according to the configuration information. The station determines the resource status information according to the configuration information. For example, the configuration information may include busy/idle state indication bit information, where the busy/idle state indication bit information is used to define identifiers of a busy state and an idle state. For example, the busy/idle state indication bit information may be defined as follows: "0" represents that a child resource is in an idle state, and "1" or "j" represents that a child resource is in a busy state. The station may detect, according to the configuration information and by using, for example, a CCA method, busy/idle states of all the child resources corresponding to the station, and this process is determining, by the station, the resource status information. A method for detecting a busy/idle state of a child resource by the station is not limited in this embodiment of the present invention, provided that the busy/idle state of a child resource can be determined.

Optionally, in another embodiment, the access point 20 may not include a sending unit 23. In this embodiment of the present invention, the configuration information may be set in advance for the station, so that the station determines the resource status information according to the configuration information.

Optionally, in an embodiment, the sending unit 23 may carry the configuration information in an access response frame or a re-access response frame when sending the configuration information to the station. After the station sends an access request frame (a re-access request frame) to the access point 20, the sending unit 23 sends the access response frame (the re-access response frame) to the station. The access point 20 allocates an access identity (AID, Access Identity) to the station, and carries the configuration information in a frame body (Frame Body). The station, the AID, and the resource status information may be in one-to-one correspondence with each other.

It should be understood that, in this embodiment of the present invention, the configuration information may be carried in the access response frame or the re-access response frame, or the configuration information may be carried in another message; how the sending unit 23 sends the configuration information to the station is not limited in this embodiment of the present invention.

It should be further understood that a time at which the sending unit 23 sends the configuration information is not limited in the present invention. Optionally, the receiving unit 21 may be configured to receive the access request frame or the re-access request frame sent by the station. In this case, after the access point 20 receives a triggering message such as an access request frame or a re-access request frame, the sending unit 23 may send the configuration information to the station. Optionally, in another embodiment, the access point 20 of this embodiment of the present invention may also proactively send the configuration information to the station, or may send the configuration information to the station at regular intervals.

In this embodiment of the present invention, a station sends resource status information to an access point, so as to report a busy/idle state of a child resource on the station to the access point. In this way, the access point can allocate, according to the busy/idle state of a child resource on the station, an appropriate resource for data transmission, thereby reducing a data transmission collision possibility.

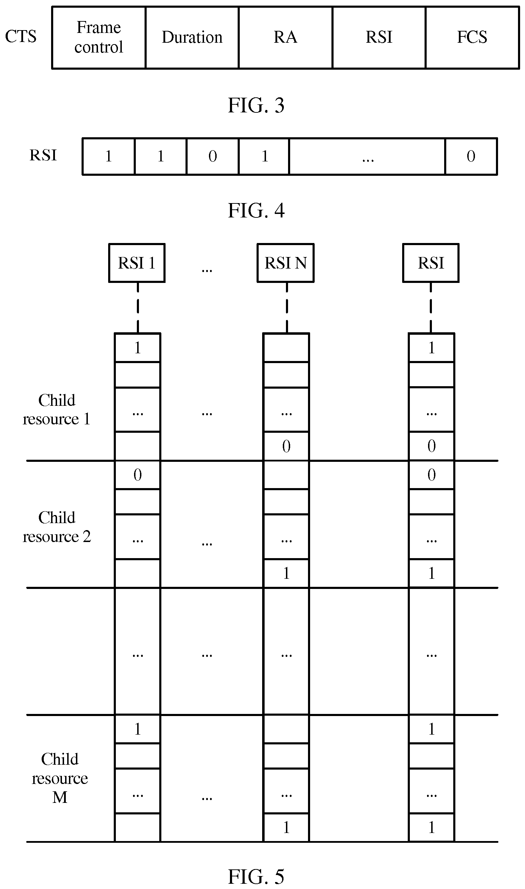

Optionally, in an embodiment, the resource status information may be carried in a clear-to-send frame in this embodiment of the present invention. The access point 20 may send a request-to-send frame to the station, and the station performs detection after receiving the request-to-send frame sent by the access point 20. If a detection result is that an NAV is zero and a CCA assessment result indicates that a channel that is used to transmit data between the access point 20 and the station is idle, the station sends the clear-to-send frame to the access point 20, and the clear-to-send frame may carry the resource status information. With reference to FIG. 3 to FIG. 5, the following describes in detail how the clear-to-send frame carries the resource status information.

FIG. 3 is a schematic diagram of a clear-to-send frame according to an embodiment of the present invention. As shown in FIG. 3, the resource status information may be in a frame middle part of the clear-to-send frame.

The clear-to-send frame may include the following information: frame control (Frame Control), duration (Duration), a receiver address (Receiver Address, RA), and a frame check sequence (Frame Check Sequence, FCS).

The resource status information may be in a frame trailer of the clear-to-send frame, that is, the resource status information RSI may be behind the FCS.

Optionally, in another embodiment, the resource status information may also be in the frame middle part of the clear-to-send frame. For example, the resource status information RSI may be between the RA and the FCS. Alternatively, the resource status information may also be between the Frame Control and the Duration, or may be between the Duration and the RA.

In this embodiment of the present invention, a station sends, to an access point, a clear-to-send frame that carries resource status information, so as to report a busy/idle state of a child resource on the station to the access point. In this way, the access point can allocate, according to the busy/idle state of a child resource on the station, an appropriate resource for data transmission, thereby reducing a data transmission collision possibility.

FIG. 4 is a schematic diagram of resource status information according to an embodiment of the present invention. When a station sends the resource status information to the access point, resource status information may include a bitmap.

Optionally, in an embodiment, each bit of the bitmap represents a busy/idle state of a child resource. The bitmap may include multiple bits, and one bit may represent a busy/idle state of one child resource. All the child resources obtained after the channel resource is divided may be represented by the multiple bits.

When a state of the child resource is busy, a bit corresponding to the child resource may be represented by using binary "1"; or when a state of the child resource is idle, a bit corresponding to the child resource may be represented by using binary "0". Correspondingly, another numerical representation method may also be used to represent the bit corresponding to the child resource. For example, when a state of the child resource is busy, the bit corresponding to the child resource may also be represented by using binary "0"; or when a state of the child resource is idle, the bit corresponding to the child resource may be represented by using binary "1".

Alternatively, if the child resource is a resource block, a bit may represent a busy/idle state of a resource block. When the child resource is a resource block group, a bit may represent a busy/idle state of a resource block group.

When the child resource is a resource block group, the configuration information of the resource status information may further include RBG granularity indication information. The RBG granularity indication information is used to indicate a quantity of RBs included in one RBG. For example, when a value of the RBG granularity indication information is "1", it represents that one RBG includes one RB, when a value of the RBG granularity indication information is "2", it represents that one RBG includes two RBs, and so on.

In this embodiment of the present invention, a station sends, to an access point, a clear-to-send frame that carries resource status information, so as to report a busy/idle state of a child resource on the station to the access point. In this way, the access point can allocate, according to the busy/idle state of a child resource on the station, an appropriate resource for data transmission, thereby reducing a data transmission collision possibility.

FIG. 5 is a schematic diagram of resource status information according to another embodiment of the present invention. The resource status information may be carried in an appended OFDM symbol. The appended OFDM symbol may be appended to the clear-to-send frame. When multiple stations simultaneously send resource status information to the access point, the resource status information may be carried in an appended OFDM symbol. FIG. 5 is an embodiment in which the resource status information is carried in the appended OFDM symbol.

N pieces of resource status information (corresponding to RSI 1 to RSI N in FIG. 5) shown in FIG. 5 may correspond to N stations. The N pieces of resource status information may be carried in one appended OFDM symbol. Optionally, the appended OFDM symbol may be appended to the clear-to-send frame.

A station may use one subcarrier of one child resource to represent a busy/idle state of the child resource on the station, and a station may use multiple subcarriers corresponding to multiple child resources to represent busy/idle states of the multiple child resources on the station.

For example, when the child resource includes N subcarriers, the N subcarriers may respectively represent busy/idle states of the child resource on the N stations. If the appended OFDM symbol includes M child resources, and each child resource includes N subcarriers, the appended OFDM symbol may represent busy/idle states of the M child resources on each of the N stations. M×N subcarriers included in the appended OFDM symbol are used to carry resource status information of each of the M child resources on the N stations.

Optionally, in an embodiment, resource status information that is of a station in this embodiment of the present invention and that is corresponding to the M child resources may be at a fixed location in each child resource. For example, resource status information of the first station may be busy/idle states that are of the M child resources and that is corresponding to the first station. For example, all the busy/idle states that are of the M child resources and that are corresponding to the first station may be carried on first subcarriers of the M child resources. Analogically, all busy/idle states that are of the M child resources and that are corresponding to the second station may be carried on second subcarriers of the M child resources. By analogy, all busy/idle states that are of the M child resources and that are corresponding to the N^{th} station may be carried on N^{th} subcarriers of the M child resources. In this embodiment of the present invention, the subcarriers may also be used to carry the resource status information in another arrangement manner, and an arrangement manner of carrying the resource status information by the subcarriers is not limited in this embodiment of the present invention.

Optionally, in another embodiment, the resource status information in this embodiment of the present invention carried on the subcarrier may use a real number or an imaginary number to represent a busy/idle state of the child resource. For example, the resource status information may use "1" or "j" to represent that a state of the child resource is busy. When both "1" and "j" are used, one subcarrier can carry busy/idle states that are of a child resource to which the subcarrier belongs and that are on two stations. In this case, N subcarriers of one child resource can carry busy/idle states of the child resource on 2N stations. Therefore, M×N subcarriers included in M child resources can carry busy/idle states of the M child resources on 2N stations, that is, resource status information of the 2N stations.

Optionally, in another embodiment, if multiple stations simultaneously send resource status information to the access point, configuration information of the resource status information may further include subcarrier location information and grouping information. The subcarrier location information is used to indicate locations or a sequence of subcarriers that are of a child resource of the station and that are used to carry the resource status information. The grouping information is used to group the stations, so that stations in a same group can simultaneously feed back resource status information.

In this embodiment of the present invention, a station sends, to an access point, a clear-to-send frame that carries resource status information, so as to report a busy/idle state of a child resource on the station to the access point. In this way, the access point can allocate, according to the busy/idle state of a child resource on the station, an appropriate resource for data transmission, thereby reducing a data transmission collision possibility.

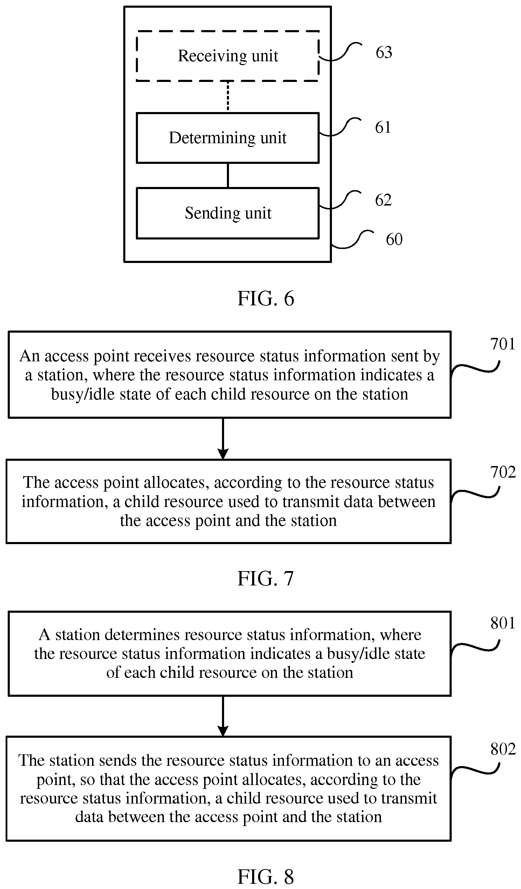

FIG. 6 is a block diagram of a station of a wireless local area network according to an embodiment of the present invention. As shown in FIG. 6, the station 60 may include a determining unit 61 and a sending unit 62. A channel resource of the wireless local area network is divided into multiple child resources in a frequency domain. The station 60 can interact with the access point 20 shown in FIG. 2.

The determining unit 61 is configured to determine resource status information, where the resource status information indicates a busy/idle state of each child resource on the station 60.

The sending unit 62 is configured to send the resource status information to the access point 20, so that the access point 20 allocates, according to the resource status information, the child resource used to transmit data between the access point and the station.

In this embodiment of the present invention, a station sends resource status information to an access point, so as to report a busy/idle state of a child resource on the station to the access point. In this way, the access point can allocate, according to the busy/idle state of a child resource on the station, an appropriate resource for data transmission, thereby reducing a data transmission collision possibility.

It should be understood that each child resource may occupy a symbol in a time domain, or may also occupy one or more subcarriers in a frequency domain. The resource status information (RSI, Resource Status Information) may correspond to a busy/idle state of the child resource. For example, busy/idle states of all child resources of a channel resource corresponding to a station may correspond to a piece of resource status information. In this way, multiple stations may correspond to multiple pieces of resource status information.

It should be further understood that only a case in which there is one station 60 is listed in FIG. 6. Optionally, there may be multiple stations in this embodiment of the present invention, and description of the station 60 in this embodiment of the present invention may be applicable to the multiple stations. The station 60 corresponds to a piece of resource status information, and the multiple stations may separately determine resource status information, and send corresponding multiple pieces of resource status information to the access point 20, so that the access point 20 obtains busy/idle states of all child resources of a channel resource corresponding to each station.

Optionally, a representation form of the child resource is not limited in this embodiment of the present invention. The channel resource can be divided into multiple child resources, and the child resources can represent any part of the channel resource. For a WLAN system based on an OFDMA technology, the channel resource is divided into multiple orthogonal resource blocks (RB, Resource Block). In this case, the child resource may be a resource block. If the resource blocks are grouped into a form of resource block groups (RBG, Resource Block Group), in this case, the child resource may be a resource block group. For a WLAN system based on an OFDM technology, the channel resource may be divided, in a simulation manner, into multiple simulative resource blocks or simulative resource block groups.

Optionally, in another embodiment, the station 60 further includes a receiving unit 63. The receiving unit 63 is configured to receive configuration information of the resource status information sent by the access point 20, where the configuration information is used to instruct the station 60 to determine the resource status information according to the configuration information.

Specifically, the determining unit 61 of the station 60 may determine the resource status information according to the configuration information sent by the access point 20. For example, the configuration information may include busy/idle state indication bit information, where the busy/idle state indication bit information is used to define identifiers of a busy state and an idle state. For example, the busy/idle state indication bit information may be defined as follows: "0" represents that a child resource is in an idle state, and "1" or "j" represents that a child resource is in a busy state. The station may detect, according to the configuration information and by using, for example, a CCA method, busy/idle states of all the child resources corresponding to the station, and this process is determining, by the station, the resource status information. A method for detecting a busy/idle state of a child resource by the station is not limited in this embodiment of the present invention, provided that the busy/idle state of a child resource can be determined.

Optionally, in another embodiment, the station 60 may not include a receiving unit 63. The configuration information may be set in advance for the station 60, so that the station 60 determines the resource status information according to the preset configuration information.

Optionally, in another embodiment, the station 60 may send an access request frame or a re-access request frame to the access point 20 before receiving the configuration information sent by the access point 20. After receiving the access request frame (the re-access request frame), the access point 20 sends an access response frame (a re-access response frame) to the station 60, and carries the configuration information of the resource status information in the access response frame (the re-access response frame). The access point 20 allocates an access identity (AID, Access Identity) to the station, and carries the configuration information in a frame body. The station, the AID, and the resource status information may be in one-to-one correspondence with each other.

It should be understood that, in this embodiment of the present invention, the receiving unit 63 of the station 60 may also obtain the configuration information from a message that carries the configuration information; how the receiving unit 63 obtains the configuration information is not limited in this embodiment of the present invention.

It should be further understood that a time at which the receiving unit 63 obtains the configuration information is not limited in this embodiment of the present invention. For example, the receiving unit 63 may further receive the configuration information sent by the access point 20 at regular intervals.

In this embodiment of the present invention, a station sends resource status information to an access point, so as to report a busy/idle state of a child resource on the station to the access point. In this way, the access point can allocate, according to the busy/idle state of a child resource on the station, an appropriate resource for data transmission, thereby reducing a data transmission collision possibility.

Optionally, in an embodiment, the resource status information may be carried in a clear-to-send frame in this embodiment of the present invention. The access point 20 may send a request-to-send frame to the station 60, and the station 60 performs detection after receiving the request-to-send frame sent by the access point 20. If a detection result is that an NAV is zero and a CCA assessment result indicates that a channel that is used to transmit data between the access point 20 and the station 60 is idle, the station 60 sends the clear-to-send frame to the access point 20, and the clear-to-send frame may carry the resource status information. For a method for carrying the resource status information by the clear-to-send frame, refer to the methods shown in FIG. 3 to FIG. 5, which are not described herein again to avoid repetition.

FIG. 7 is a schematic flowchart of a method for transmitting information by using a wireless local area network according to an embodiment of the present invention. The method shown in FIG. 7 can be executed by an access point.

701. An access point receives resource status information sent by a station, where the resource status information indicates a busy/idle state of each child resource on the station.

702. The access point allocates, according to the resource status information, a child resource used to transmit data between the access point and the station.

In this embodiment of the present invention, a station sends resource status information to an access point, so as to report a busy/idle state of a child resource on the station to the access point. In this way, the access point can allocate, according to the busy/idle state of a child resource on the station, an appropriate resource for data transmission, thereby reducing a data transmission collision possibility.

It should be understood that each child resource may occupy a symbol in a time domain, or may also occupy one or more subcarriers in a frequency domain. The resource status information (RSI, Resource Status Information) may correspond to a busy/idle state of the child resource. For example, busy/idle states of all child resources of a channel resource corresponding to a station may correspond to a piece of resource status information. In this way, multiple stations may correspond to multiple pieces of resource status information.

Optionally, there may be multiple stations in this embodiment of the present invention, and each station corresponds to a piece of resource status information. The multiple stations may separately determine resource status information and send corresponding multiple pieces of resource status information to the access point, so that the access point obtains busy/idle states of all child resources of a channel resource corresponding to each station.

Optionally, a representation form of the child resource is not limited in this embodiment of the present invention. The channel resource can be divided into multiple child resources, and the child resources can represent any part of the channel resource. For a WLAN system based on an OFDMA technology, the channel resource is divided into multiple orthogonal resource blocks (RB, Resource Block). In this case, the child resource may be a resource block. If the resource blocks are grouped into a form of resource block groups (RBG, Resource Block Group), in this case, the child resource may be a resource block group. For a WLAN system based on an OFDM technology, the channel resource may be divided, in a simulation manner, into multiple simulative resource blocks or simulative resource block groups.

Optionally, in another embodiment, before the access point receives the resource status information sent by the station, the access point may send configuration information of the resource status information to the station. The station determines the resource status information according to the configuration information. For example, the configuration information may include busy/idle state indication bit information, where the busy/idle state indication bit information is used to define identifiers of a busy state and an idle state. For example, the busy/idle state indication bit information may be defined as follows: "0" represents that a child resource is in an idle state, and "1" or "j" represents that a child resource is in a busy state. The station may detect, according to the configuration information and by using, for example, a CCA method, busy/idle states of all the child resources corresponding to the station, and this process is determining, by the station, the resource status information. A method for detecting a busy/idle state of a child resource by the station is not limited in this embodiment of the present invention, provided that the busy/idle state of a child resource can be determined.

Optionally, in another embodiment, the access point may not send configuration information to the station. In this embodiment of the present invention, the configuration information may be set in advance for the station, so that the station determines the resource status information according to the configuration information.

Optionally, in an embodiment, the access point in this embodiment of the present invention may carry the configuration information in an access response frame or a re-access response frame when sending the configuration information to the station. After the station sends an access request frame (a re-access request frame) to the access point, the access point sends the access response frame (the re-access response frame) to the station. The access point allocates an access identity (AID, Access Identity) to the station, and carries the configuration information in a frame body. The station, the AID, and the resource status information may be in one-to-one correspondence with each other.

It should be understood that, in this embodiment of the present invention, the configuration information may be carried in the access response frame or the re-access response frame, or the configuration information may be carried in another message; how the access point sends the configuration information to the station is not limited in this embodiment of the present invention.

It should be further understood that a manner in which the access point sends the configuration information is not limited in the present invention. Optionally, the access point may send the configuration information to the station after receiving a triggering message (for example, an access request frame or a re-access request frame), or may proactively send the configuration information to the station, or may send the configuration information to the station at regular intervals.

In this embodiment of the present invention, a station sends resource status information to an access point, so as to report a busy/idle state of a child resource on the station to the access point. In this way, the access point can allocate, according to the busy/idle state of a child resource on the station, an appropriate resource for data transmission, thereby reducing a data transmission collision possibility.

Optionally, in an embodiment, the resource status information may be carried in a clear-to-send frame in this embodiment of the present invention. The access point may send a request-to-send frame to the station, and the station performs detection after receiving the request-to-send frame sent by the access point. If a detection result is that an NAV is zero and a CCA assessment result indicates that a channel that is used to transmit data between the access point and the station is idle, the station sends the clear-to-send frame to the access point, and the clear-to-send frame may carry the resource status information. For a method for carrying the resource status information by the clear-to-send frame, refer to the methods shown in FIG. 3 to FIG. 5, which are not described herein again to avoid repetition.

FIG. 8 is a schematic flowchart of a method for transmitting information by using a wireless local area network according to another embodiment of the present invention. The method shown in FIG. 8 can be executed by a station.

801. A station determines resource status information, where the resource status information indicates a busy/idle state of each child resource on the station.

802. The station sends the resource status information to an access point, so that the access point allocates, according to the resource status information, a child resource used to transmit data between the access point and the station.

In this embodiment of the present invention, a station sends resource status information to an access point, so as to report a busy/idle state of a child resource on the station to the access point. In this way, the access point can allocate, according to the busy/idle state of a child resource on the station, an appropriate resource for data transmission, thereby reducing a data transmission collision possibility.

It should be understood that the resource status information (RSI, Resource Status Information) may correspond to a busy/idle state of a child resource. For example, busy/idle states of all child resources of a channel resource corresponding to a station may correspond to a piece of resource status information. In this way, multiple stations may correspond to multiple pieces of resource status information.

Optionally, there may be multiple stations in this embodiment of the present invention, and each station corresponds to a piece of resource status information. The multiple stations may separately determine resource status information and send corresponding multiple pieces of resource status information to the access point, so that the access point obtains busy/idle states of all child resources of a channel resource corresponding to each station.

Optionally, a representation form of the child resource is not limited in this embodiment of the present invention. The channel resource can be divided into multiple child resources, and the child resources can represent any part of the channel resource. For a WLAN system based on an OFDMA technology, the channel resource is divided into multiple orthogonal resource blocks (RB, Resource Block). In this case, the child resource may be a resource block. If the resource blocks are grouped into a form of resource block groups (RBG, Resource Block Group), in this case, the child resource may be a resource block group. For a WLAN system based on an OFDM technology, the channel resource may be divided, in a simulation manner, into multiple simulative resource blocks or simulative resource block groups.

Optionally, in another embodiment, before the station determines the resource status information, the station may receive configuration information of the resource status information sent by the access point. The station may determine the resource status information according to the configuration information. For example, the configuration information may include busy/idle state indication bit information, where the busy/idle state indication bit information is used to define identifiers of a busy state and an idle state. For example, the busy/idle state indication bit information may be defined as follows: "0" represents that a child resource is in an idle state, and "1" or "j" represents that a child resource is in a busy state. The station may detect, according to the configuration information and by using, for example, a CCA method, busy/idle states of all the child resources corresponding to the station, and this process is determining, by the station, the resource status information. A method for detecting a busy/idle state of a child resource by the station is not limited in this embodiment of the present invention, provided that the busy/idle state of a child resource can be determined.

Optionally, in another embodiment, the configuration information may be set in advance for the station, and a resource status is determined according to the configuration information.

Optionally, in another embodiment, the station may send an access request frame or a re-access request frame to the access point before receiving the configuration information sent by the access point. After receiving the access request frame (the re-access request frame), the access point sends an access response frame (a re-access response frame) to the station, and carries the configuration information of the resource status information in the access response frame (the re-access response frame). The access point allocates an access identity (AID, Access Identity) to the station, and carries the configuration information in a frame body. The station, the AID, and the resource status information may be in one-to-one correspondence with each other.

It should be understood that, in this embodiment of the present invention, the station may also obtain the configuration information from a message that carries the configuration information; how the station obtains the configuration information is not limited in this embodiment of the present invention.

It should be further understood that a time at which the station obtains the configuration information is not limited in this embodiment of the present invention. For example, the station may further receive, at regular intervals, the configuration information sent by the access point.

In this embodiment of the present invention, a station sends resource status information to an access point, so as to report a busy/idle state of a child resource on the station to the access point. In this way, the access point can allocate, according to the busy/idle state of a child resource on the station, an appropriate resource for data transmission, thereby reducing a data transmission collision possibility.

Optionally, in an embodiment, the resource status information may be carried in a clear-to-send frame in this embodiment of the present invention. The access point may send a request-to-send frame to the station, and the station performs detection after receiving the request-to-send frame sent by the access point. If a detection result is that an NAV is zero and a CCA assessment result indicates that a channel that is used to transmit data between the access point and the station is idle, the station sends the clear-to-send frame to the access point, and the clear-to-send frame may carry the resource status information. For a method for carrying the resource status information by the clear-to-send frame, refer to the methods shown in FIG. 3 to FIG. 5, which are not described herein again to avoid repetition.

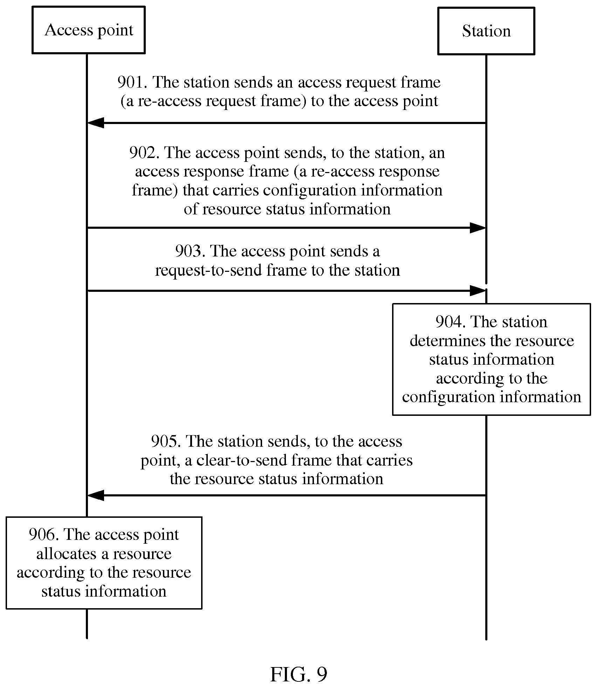

FIG. 9 is a schematic flowchart of a process of an information transmission method according to an embodiment of the present invention. In FIG. 9, a process of an information transmission method includes an interaction process between an access point and a station.

901. The station sends an access request frame (a re-access request frame) to the access point.

902. The access point sends, to the station, an access response frame (a re-access response frame) that carries configuration information of resource status information.

The resource status information can indicate a busy/idle state of a child resource divided from a channel resource that is used for data transmission between the access point and the station. Optionally, a representation form of the child resource is not limited in this embodiment of the present invention. The channel resource can be divided into multiple child resources, and the child resources can represent any part of the channel resource. For a WLAN system based on an OFDMA technology, the channel resource is divided into multiple orthogonal resource blocks (RB, Resource Block). In this case, the child resource may be a resource block. If the resource blocks are grouped into a form of resource block groups (RBG, Resource Block Group), in this case, the child resource may be a resource block group. For a WLAN system based on an OFDM technology, the channel resource may be divided, in a simulation manner, into multiple simulative resource blocks or simulative resource block groups.

The configuration information of the resource status information can indicate how the station configures the resource status information. Specifically, the configuration information may include busy/idle state indication bit information, where the busy/idle state indication bit information is used to define identifiers of a busy state and an idle state. For example, the busy/idle state indication bit information may be defined as follows: "0" represents that a child resource is in an idle state, and "1" or "j" represents that a child resource is in a busy state. The station may detect, according to the configuration information and by using, for example, a CCA method, busy/idle states of all the child resources corresponding to the station, and this process is determining, by the station, the resource status information. A method for detecting a busy/idle state of a child resource by the station is not limited in this embodiment of the present invention, provided that the busy/idle state of a child resource can be determined.

When the child resource is a resource block group, the configuration information of the resource status information may further include RBG granularity indication information. For example, when a value of the RBG granularity indication information is "1", it represents that one RBG includes one RB, when a value of the RBG granularity indication information is "2", it represents that one RBG includes two RBs, and so on.

903. The access point sends a request-to-send frame to the station.

The access point may send the request-to-send frame to the station before transmitting data to the station, and the request-to-send frame may be used by the access point to request the station to allow the access point to transmit the data.

904. The station determines the resource status information according to the configuration information.

After receiving the request-to-send frame, the station may detect, according to the configuration information and by using, for example, the CCA method, the busy/idle states of all the child resources corresponding to the station. A method for detecting a busy/idle state of a child resource by the station is not limited in this embodiment of the present invention, provided that the busy/idle state of a child resource can be determined.

905. The station sends, to the access point, a clear-to-send frame that carries the resource status information.

Optionally, in an embodiment, as shown in FIG. 3, the resource status information may be in a middle part or a trailer of the clear-to-send frame.

Optionally, in another embodiment, when the station sequentially sends the clear-to-send frame to the access point, the resource status information may be represented by using a bitmap. FIG. 4 shows resource status information that is represented based on a bitmap.

Optionally, in another embodiment, when multiple stations simultaneously send a clear-to-send frame to the access point, the resource status information may be carried on a subcarrier of an appended OFDM symbol. FIG. 5 shows resource status information that is represented based on a subcarrier of the appended OFDM symbol.

906. The access point allocates a resource according to the resource status information.

The access point can obtain the resource status information according to the clear-to-send frame, that is, can obtain the busy/idle states of the child resources. The access point can allocate the resource according to the resource status information. How the access point allocates the resources is not limited in this embodiment of the present invention. For example, the access point may send the data only on a child resource whose busy/idle state is idle; or the access point may send the data at a low rate on a child resource whose busy/idle state is busy.

In this embodiment of the present invention, a station sends resource status information to an access point, so as to report a busy/idle state of a child resource on the station to the access point. In this way, the access point can allocate, according to the busy/idle state of a child resource on the station, an appropriate resource for data transmission, thereby reducing a data transmission collision possibility.

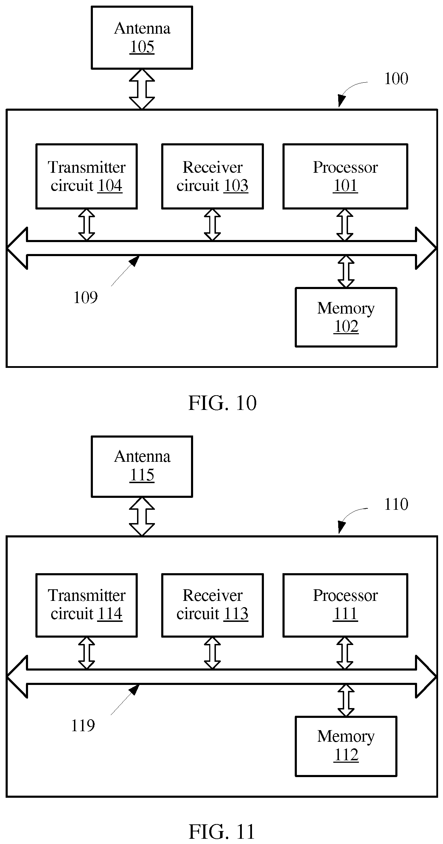

FIG. 10 is a block diagram of an access point according to another embodiment of the present invention. The access point 100 in FIG. 10 can be used to implement steps and methods in the foregoing method embodiments. A channel resource of a wireless local area network is divided into multiple child resources in a frequency domain. The access point in FIG. 10 includes a processor 101, a memory 102, a receiver circuit 103, and a transmitter circuit 104. The processor 101, the memory 102, the receiver circuit 103, and the transmitter circuit 104 are connected to each other by using a bus system 109.

In addition, the access point 100 may further include an antenna 105 and the like. The processor 101 controls an operation of the access point 100. The memory 102 may include a read-only memory and a random access memory, and provides an instruction and data for the processor 101. A part of the memory 102 may further include a nonvolatile random access memory (NVRAM). In a specific application, the transmitter circuit 104 and the receiver circuit 103 may be coupled to the antenna 105. All components of the access point 100 are coupled together by using the bus system 109, where in addition to a data bus, the bus system 109 further includes a power bus, a control bus, and a status signal bus. However, for clarity of description, various buses are marked as the bus system 109 in the figure.

The processor 101 may be an integrated circuit chip and has a signal processing capability. The processor 101 may be a general purpose processor, a digital signal processor (DSP), an application-specific integrated circuit (ASIC), a field programmable gate array (FPGA), or another programmable logic device, discrete gate or transistor logic device, or discrete hardware component. Various methods, steps, and logical block diagrams disclosed in this embodiment of the present invention may be implemented or executed. The general purpose processor may be a microprocessor, or may be any conventional processor, or the like. The processor 101 reads information in the memory 102, and controls all the components of the access point 100 by using hardware of the processor 101.

The method in FIG. 7 can be implemented by using the access point 100 in FIG. 10, and details are not described again to avoid repetition.

Specifically, under control of the processor 101, the access point 100 implements the following operations:
receiving resource status information sent by a station, where the resource status information indicates a busy/idle state of each child resource on the station; and
allocating, according to the resource status information, a child resource used to transmit data between the access point and the station.

In this embodiment of the present invention, a station sends resource status information to an access point, so as to report a busy/idle state of a child resource on the station to the access point. In this way, the access point can allocate, according to the busy/idle state of a child resource on the station, an appropriate resource for data transmission, thereby reducing a data transmission collision possibility.

Optionally, in an embodiment, the transmitter circuit 104 may send configuration information of the resource status information to the station, where the configuration information is used to instruct the station to determine the resource status information according to the configuration information.

Optionally, in another embodiment, the receiver circuit 103 may be configured to receive a clear-to-send frame sent by the station, where the clear-to-send frame carries the resource status information.

Optionally, in another embodiment, the resource status information carried in the clear-to-send frame received by the receiver circuit 103 is in a middle part or a trailer of the clear-to-send frame.

Optionally, in another embodiment, the receiver circuit 103 is configured to receive a clear-to-send frame and an appended orthogonal frequency division multiplexing OFDM symbol appended to the clear-to-send frame that are sent by the station, where the appended OFDM symbol carries the resource status information.

Optionally, in another embodiment, the resource status information received by the receiver circuit 103 is on a subcarrier of the appended OFDM symbol, where a location of the subcarrier on which the resource status information is located is fixed relative to each child resource on the appended OFDM symbol.

Optionally, in another embodiment, the resource status information received by the receiver circuit 103 includes a bitmap, where each bit of the bitmap represents a busy/idle state of a child resource.

Optionally, in another embodiment, the transmitter circuit 104 is configured to send an access response frame or a re-access response frame to the station, where the access response frame or the re-access response frame includes the configuration information.

Optionally, in another embodiment, the transmitter circuit 104 is configured to periodically send the configuration information to the station.

Optionally, in another embodiment, the configuration information that is of the resource status information and that is received by the receiver circuit 103 from the station may include at least one piece of the following information: busy/idle state indication bit information, resource block group granularity indication information, subcarrier location information, or user group information.

Optionally, in another embodiment, the child resource includes a resource block or a resource block group of an orthogonal frequency division multiple access OFDMA system; or the child resource includes a simulative resource block or a simulative resource block group of an OFDM system.

FIG. 11 is a block diagram of a station according to another embodiment of the present invention. A station 110 in FIG. 11 may be configured to implement all steps and methods in the foregoing method embodiments. A channel resource of a wireless local area network is divided into multiple child resources in a frequency domain. The station 110 in FIG. 11 includes a processor 111, a memory 112, a receiver circuit 113, and a transmitter circuit 114. The processor 111, the memory 112, the receiver circuit 113, and the transmitter circuit 114 are connected to each other by using a bus system 119.

In addition, the station 110 may further include an antenna 115 and the like. The processor 111 controls an operation of the station 110. The memory 112 may include a read-only memory and a random access memory, and provides an instruction and data for the processor 111. A part of the memory 112 may further include a nonvolatile random access memory (NVRAM). In a specific application, the transmitter circuit 114 and the receiver circuit 113 may be coupled to the antenna 115. All components of the station 110 are coupled together by using a bus system 119, where in addition to a data bus, the bus system 119 further includes a power bus, a control bus, and a status signal bus. However, for clarity of description, various buses are marked as the bus system 119 in the figure.

The processor 111 may be an integrated circuit chip and has a signal processing capability. The processor 111 may be a general purpose processor, a digital signal processor (DSP), an application-specific integrated circuit (ASIC), a field programmable gate array (FPGA), or another programmable logic device, discrete gate or transistor logic device, or discrete hardware component. Various methods, steps, and logical block diagrams disclosed in this embodiment of the present invention may be implemented or executed. The general purpose processor may be a microprocessor, or may be any conventional processor, or the like. The processor 111 reads information in the memory 112, and controls all the components of the station 110 by using hardware of the processor 111.

The method in FIG. 8 can be implemented by using the station 110 in FIG. 11, and details are not described again to avoid repetition.

Specifically, under control of the processor 111, the station 110 implements the following operations:
determining resource status information, where the resource status information indicates a busy/idle state of each child resource on the station; and
sending the resource status information to an access point, so that the access point allocates, according to the resource status information, a child resource used to transmit data between the access point and the station.

In this embodiment of the present invention, a station sends resource status information to an access point, so as to report a busy/idle state of a child resource on the station to the access point. In this way, the access point can allocate, according to the busy/idle state of a child resource on the station, an appropriate resource for data transmission, thereby reducing a data transmission collision possibility.

Optionally, in an embodiment, the receiver circuit 113 may receive configuration information of the resource status information sent by the access point, where the configuration information is used to instruct the station to determine the resource status information according to the configuration information.

Optionally, in another embodiment, the transmitter circuit 114 may send a clear-to-send frame to the access point, where the clear-to-send frame carries the resource status information.

Optionally, in another embodiment, the resource status information carried in the clear-to-send frame sent by the transmitter circuit 114 is in a middle part or a trailer of the clear-to-send frame.

Optionally, in another embodiment, the transmitter circuit 114 sends a clear-to-send frame and an appended orthogonal frequency division multiplexing OFDM symbol appended to the clear-to-send frame to the access point, where the appended OFDM symbol carries the resource status information.

Optionally, in another embodiment, the resource status information sent by the transmitter circuit 114 is on a subcarrier of the appended OFDM symbol, where a location of the subcarrier on which the resource status information is located is fixed relative to each child resource on the appended OFDM symbol.

Optionally, in another embodiment, the resource status information sent by the transmitter circuit 114 includes a bitmap, where each bit of the bitmap represents a busy/idle state of a child resource.

Optionally, in another embodiment, the receiver circuit 113 receives an access response frame or a re-access response frame sent by the access point, where the access response frame or the re-access response frame includes the configuration information.

Optionally, in another embodiment, the receiver circuit 113 receives the configuration information periodically sent by the access point.

Optionally, in another embodiment, the configuration information that is of the resource status information and sent by the transmitter circuit 114 may include at least one piece of the following information: busy/idle state indication bit information, resource block group granularity indication information, subcarrier location information, or user group information.

Optionally, in another embodiment, the child resource includes a resource block or a resource block group of an orthogonal frequency division multiple access OFDMA system; or the child resource includes a simulative resource block or a simulative resource block group of an OFDM system.

It should be understood that "an embodiment" or "another embodiment" mentioned in the whole specification means that particular features, structures, or characteristics related to the embodiment are included in at least one embodiment of the present invention. Therefore, "in an embodiment" or "in another embodiment" appearing throughout the specification does not refer to a same embodiment. In addition, these particular features, structures, or characteristics may be combined in one or more embodiments by using any appropriate manner. Sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

In addition, the terms "system" and "network" may be used interchangeably in this specification. The term "and/or" in this specification describes only an association relationship for describing associated objects and represents that there may be three relationships. For example, A and/or B may represent the following three cases: only A exists, both A and B exist, and only B exists. In addition, the character "/" in this specification generally indicates an "or" relationship between the associated objects.

It should be understood that in the embodiments of the present invention, "B corresponding to A" indicates that B is associated with A, and B may be determined according to A. However, it should further be understood that determining A according to B does not mean that B is determined according to A only; that is, B may also be determined according to A and/or other information.

Persons of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. Persons skilled in the art may use different methods to implement the described functions for each particular application, but it should not be considered that the implementation goes beyond the scope of the present invention.

It may be clearly understood by persons skilled in the art that, for the purpose of convenient and brief description, for a detailed working process of the foregoing system, apparatus, and unit, refer to a corresponding process in the foregoing method embodiments, and details are not described herein.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

With descriptions of the foregoing embodiments, persons skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk (Disk) and disc (disc) used by the present invention include a compact disc (CD), a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

In summary, what is described above is merely exemplary embodiments of the technical solutions of the present invention, but is not intended to limit the protection scope of the present invention. Any modification, equivalent replacement, or improvement made without departing from the principle of the present invention shall fall within the protection scope of the present invention.

## Claims

1. An access point (101, 20) of a wireless local area network, wherein an OFDMA time-frequency channel resource of the wireless local area network is divided into multiple child resources in a frequency domain, said child resources corresponding to orthogonal time-frequency resource blocks or resource block groups, wherein resource blocks are orthogonal in frequency and can be shared in time, and the access point (101, 20) comprises:
a receiving unit (21), configured to receive resource status information sent by a station (102, 60), wherein the resource status information indicates a busy/idle state of each of the child resources on the station (102, 60);
an allocation unit (22), configured to allocate, according to the resource status information, the child resource used to transmit data between the access point (101, 20) and the station (102, 60), and
a sending unit (23), configured to send configuration information of the resource status information to the station (102, 60), said configuration information including resource block group granularity indication information, wherein the resource block group granularity indication information indicates the number of resource blocks included by a resource block group, wherein the configuration information is used to instruct the station (102, 60) to determine the resource status information according to the configuration information.

2. The access point (101, 20) according to claim 1, wherein the receiving unit (21) is specifically configured to receive a clear-to-send frame sent by the station (102, 60), and the clear-to-send frame carries the resource status information.

3. The access point (101, 20) according to claim 2, wherein the resource status information carried in the clear-to-send frame received by the receiving unit (21) is in a middle part or a trailer of the clear-to-send frame.

4. The access point (101, 20) according to claim 1, wherein the receiving unit (21) is specifically configured to receive a clear-to-send frame and an appended orthogonal frequency division multiplexing OFDM symbol appended to the clear-to-send frame that are sent by the station, and the appended OFDM symbol carries the resource status information.

5. A station (102, 60) of a wireless local area network, wherein an OFDMA time-frequency channel resource of the wireless local area network is divided into multiple child resources in a frequency domain, said child resources corresponding to orthogonal time-frequency resource blocks or resource block groups, wherein resource blocks are orthogonal in frequency and can be shared in time, and the station (102, 60) comprises:
a determining unit (61), configured to determine resource status information, wherein the resource status information indicates a busy/idle state of each of the child resources on the station (102, 60);
a sending unit (62), configured to send the resource status information to an access point (101, 20), so that the access point (101, 20) allocates, according to the resource status information, the child resource used to transmit data between the access point (101, 20) and the station (102, 60), and
a receiving unit (63), configured to receive configuration information that is of the resource status information and sent by the access point (101, 20), said configuration information including resource block group granularity indication information, wherein the resource block group granularity indication information indicates the number of resource blocks included by a resource block group, wherein the configuration information is used to instruct the station (102, 60) to determine the resource status information according to the configuration information.

6. The station (102, 60) according to claim 5, wherein the sending unit (62) is specifically configured to send a clear-to-send frame to the access point, and the clear-to-send frame carries the resource status information.

7. The station (102, 60) according to claim 6, wherein the resource status information carried in the clear-to-send frame sent by the sending unit is in a middle part or a trailer of the clear-to-send frame.

8. The station (102, 60) according to claim 5, wherein the sending unit (62) is specifically configured to send a clear-to-send frame and an appended orthogonal frequency division multiplexing OFDM symbol appended to the clear-to-send frame to the access point, and the appended OFDM symbol carries the resource status information.

9. A method for transmitting information by using a wireless local area network, wherein an OFDMA time-frequency channel resource of the wireless local area network is divided into multiple child resources in a frequency domain, said child resources corresponding to orthogonal time-frequency resource blocks or resource block groups, wherein resource blocks are orthogonal in frequency and can be shared in time, and the method comprises:
receiving, by an access point (101, 20), resource status information sent by a station (102, 60), wherein the resource status information indicates a busy/idle state of each of the child resources on the station (102, 60); and
allocating, by the access point (101, 20) according to the resource status information, the child resource used to transmit data between the access point and the station,
wherein before the receiving, by an access point, resource status information sent by a station (102, 60), the method further comprises:
sending, by the access point (101, 20), configuration information of the resource status information to the station (102, 60), said configuration information including resource block group granularity indication information, wherein the resource block group granularity indication information indicates the number of resource blocks included by a resource block group, wherein the configuration information is used to instruct the station (102, 60) to determine the resource status information according to the configuration information.

10. The method according to claim 9, wherein the receiving, by an access point (101, 20), resource status information sent by a station (102, 60) comprises:
receiving, by the access point (101, 20), a clear-to-send frame sent by the station (102, 60), wherein the clear-to-send frame carries the resource status information.

11. The method according to claim 10, wherein the resource status information is in a middle part or a trailer of the clear-to-send frame.

12. The method according to claim 9, wherein the receiving, by an access point, resource status information sent by a station (102, 60) comprises:
receiving, by the access point (101, 20), a clear-to-send frame and an appended orthogonal frequency division multiplexing OFDM symbol appended to the clear-to-send frame that are sent by the station, wherein the appended OFDM symbol carries the resource status information.

13. A method for transmitting information by using a wireless local area network, wherein an OFDMA time-frequency channel resource of the wireless local area network is divided into multiple child resources in a frequency domain, said child resources corresponding to orthogonal time-frequency resource blocks or resource block groups, wherein resource blocks are orthogonal in frequency and can be shared in time, and the method comprises:
determining, by a station (102, 60), resource status information, wherein the resource status information indicates a busy/idle state of each of the child resources on the station; and
sending, by the station (102, 60), the resource status information to an access point, so that the access point allocates, according to the resource status information, the child resource
used to transmit data between the access point and the station,
wherein before the determining, by a station, resource status information, the method further comprises :
receiving, by the station (102, 60), configuration information that is of the resource status information and sent by the access point (101, 20), said configuration information including resource block group granularity indication information, wherein the resource block group granularity indication information indicates the number of resource blocks included by a resource block group, wherein the configuration information is used to instruct the station (102, 60) to determine the resource status information according to the configuration information.

14. The method according to claim 13, wherein the sending, by the station (102, 60), the resource status information to the access point (101, 20) comprises:
sending, by the station (102, 60), a clear-to-send frame to the access point (101, 20), wherein the clear-to-send frame carries the resource status information.

15. The method according to claim 14, wherein the resource status information is in a middle part or a trailer of the clear-to-send frame.

16. The method according to claim 13, wherein the sending, by the station (102, 60), the resource status information to the access point (101, 20) comprises:
sending, by the station (102, 60), a clear-to-send frame and an appended orthogonal frequency division multiplexing OFDM symbol appended to the clear-to-send frame to the access point, wherein the appended OFDM symbol carries the resource status information.

## Patentansprüche

1. Zugangspunkt (101, 20) eines drahtlosen Lokalnetzwerks, wobei eine OFDMA Zeitfrequenzkanalressource des drahtlosen Lokalnetzwerks in mehrere Kinderressourcen in einer Frequenzdomäne unterteilt ist, wobei die Kinderressourcen orthogonalen Zeitfrequenzressourcenblöcken oder Ressourcenblockgruppen entsprechen, wobei Ressourcenblöcke in Frequenz orthogonal sind und zeitlich geteilt werden können und der Zugangspunkt (101, 20) aufweist:
eine Empfangseinheit (21), die konfiguriert ist, Ressourcenstatusinformationen zu empfangen, die durch eine Station (102, 60) gesendet werden, wobei die Ressourcenstatusinformationen einen beschäftigten/freien Zustand jeder der Kinderressourcen auf der Station (102, 60) anzeigen;
eine Zuweisungseinheit (22), die konfiguriert ist, gemäß den Ressourcenstatusinformationen die Kinderressource zuzuweisen, die verwendet wird, Daten zwischen dem Zugangspunkt (101, 20) und der Station (102, 60) zu übertragen, und
eine Sendeeinheit (23), die konfiguriert ist, Konfigurationsinformationen der Ressourcenstatusinformationen an die Station (102, 60) zu senden, wobei die Konfigurationsinformationen Ressourcenblockgruppengranularität-Anzeigeinformationen enthalten, wobei die Ressourcenblockgruppengranularität-Anzeigeinformationen die Zahl an Ressourcenblöcken anzeigen, die in einer Ressourcenblockgruppe enthalten sind, wobei die Konfigurationsinformationen verwendet werden, der Station (102, 60) zu befehlen, die Ressourcenstatusinformationen gemäß den Konfigurationsinformationen zu ermitteln.

2. Zugangspunkt (101, 20) nach Anspruch 1, wobei die Empfangseinheit (21) spezifisch konfiguriert ist, ein Freigegeben-zum-Senden-Frame zu empfangen, das durch die Station (102, 60) gesendet wird, und das Freigegeben-zum-Senden-Frame die Ressourcenstatusinformationen trägt.

3. Zugangspunkt (101, 20) nach Anspruch 2, wobei die Ressourcenstatusinformationen, die im Freigegeben-zum-Senden-Frame getragen werden, das von der Empfangseinheit (21) empfangen wird, in einem Mittelteil oder einem Nachsatz des Freigegebenen-zum-Senden-Frame sind.

4. Zugangspunkt (101, 20) nach Anspruch 1, wobei die Empfangseinheit (21) spezifisch konfiguriert ist, ein Freigegeben-zum-Senden-Frame und ein angehängtes orthogonales Frequenzmultiplex OFDM (Orthogonal Frequency Division Multiplexing) Symbol, das an das Freigegeben-zum-Senden-Frame angehängt ist, zu empfangen, die durch die Station gesendet werden und das angehängte OFDM Symbol die Ressourcenstatusinformationen trägt.

5. Station (102, 60) eines drahtlosen Lokalnetzwerks, wobei eine OFDMA Zeitfrequenzkanalressource des drahtlosen Lokalnetzwerks in mehrere Kinderressourcen in einer Frequenzdomäne geteilt ist, wobei die Kinderressourcen orthogonalen Zeitfrequenzressourcenblöcken oder Ressourcenblockgruppen entsprechen, wobei Ressourcenblöcke in Frequenz orthogonal sind und zeitlich geteilt werden können und die Station (102, 60) aufweist:
eine Ermittlungseinheit (61), die konfiguriert ist, Ressourcenstatusinformationen zu ermitteln, wobei die Ressourcenstatusinformationen einen beschäftigten/freien Zustand jeder der Kinderressourcen auf der Station (102, 60) anzeigen;
eine Sendeeinheit (62), die konfiguriert ist, die Ressourcenstatusinformationen an einen Zugangspunkt (101, 20) zu senden, sodass der Zugangspunkt (101, 20) gemäß den Ressourcenstatusinformationen die Kinderressource zuweist, die verwendet wird, Daten zwischen dem Zugangspunkt (101, 20) und der Station (102, 60) zu übertragen, und
eine Empfangseinheit (63), die konfiguriert ist, Konfigurationsinformationen zu empfangen, die von den Ressourcenstatusinformationen sind und vom Zugangspunkt (101, 20) gesendet werden, wobei die Konfigurationsinformationen Ressourcenblockgruppengranularität-Anzeigeinformationen enthalten, wobei die Ressourcenblockgruppengranularität-Anzeigeinformationen die Zahl an Ressourcenblöcken anzeigen, die in einer Ressourcenblockgruppe enthalten sind, wobei die Konfigurationsinformationen verwendet werden, der Station (102, 60) zu befehlen, die Ressourcenstatusinformationen gemäß den Konfigurationsinformationen zu ermitteln.

6. Station (102, 60) nach Anspruch 5, wobei die Sendeeinheit (62) spezifisch konfiguriert ist, ein Freigegeben-zum-Senden-Frame an den Zugangspunkt zu senden und das Freigegeben-zum-Senden-Frame die Ressourcenstatusinformationen trägt.

7. Station (102, 60) nach Anspruch 6, wobei die Ressourcenstatusinformationen, die im Freigegeben-zum-Senden-Frame getragen werden, das von der Sendeeinheit gesendet wird, in einem Mittelteil oder einem Nachsatz des Freigegeben-zum-Senden-Frames sind.

8. Station (102, 60) nach Anspruch 5, wobei die Sendeeinheit (62) spezifisch konfiguriert ist, ein Freigegeben-zum-Senden-Frame und ein angehängtes orthogonales Frequenzmultiplex OFDM Symbol, das an das Freigegeben-zum-Senden-Frame angehängt ist, an den Zugangspunkt zu senden und das angehängte OFDM Symbol die Ressourcenstatusinformationen trägt.

9. Verfahren zum Übertragen von Informationen unter Verwendung eines drahtlosen Lokalnetzwerks, wobei eine OFDMA Zeitfrequenzkanalressource des drahtlosen Lokalnetzwerks in mehrere Kinderressourcen in einer Frequenzdomäne unterteilt ist, wobei die Kinderressourcen orthogonalen Zeitfrequenzressourcenblöcken oder Ressourcenblockgruppen entsprechen, wobei Ressourcenblöcke in Frequenz orthogonal sind und zeitlich geteilt werden können und das Verfahren aufweist:
Empfangen, durch einen Zugangspunkt (101, 20), von Ressourcenstatusinformationen, die durch eine Station (102, 60) gesendet werden, wobei die Ressourcenstatusinformationen einen beschäftigten/freien Zustand jeder der Kinderressourcen auf der Station (102, 60) anzeigen; und
Zuweisen, durch den Zugangspunkt (101, 20) gemäß den Ressourcenstatusinformationen, der Kinderressource, die verwendet wird, Daten zwischen dem Zugangspunkt und der Station zu übertragen,
wobei vor dem Empfangen, durch einen Zugangspunkt, von Ressourcenstatusinformationen, die durch eine Station (102, 60) gesendet werden, das Verfahren ferner aufweist:
Senden, durch den Zugangspunkt (101, 20), von Konfigurationsinformationen der Ressourcenstatusinformationen an die Station (102, 60), wobei die Konfigurationsinformationen Ressourcenblockgruppengranularität-Anzeigeinformationen enthalten, wobei die Ressourcenblockgruppengranularität-Anzeigeinformationen die Zahl an Ressourcenblöcken anzeigen, die in einer Ressourcenblockgruppe enthalten sind, wobei die Konfigurationsinformationen verwendet werden, der Station (102, 60) zu befehlen, die Ressourcenstatusinformationen gemäß den Konfigurationsinformationen zu ermitteln.

10. Verfahren nach Anspruch 9, wobei das Empfangen, durch einen Zugangspunkt (101,20), von Ressourcenstatusinformationen, die durch eine Station (102, 60) gesendet werden, aufweist:
Empfangen, durch den Zugangspunkt (101, 20), eines Freigegeben-zum-Senden-Frames, der durch die Station (102, 60) gesendet wird, wobei das Freigegeben-zum-Senden-Frame die Ressourcenstatusinformationen trägt.

11. Verfahren nach Anspruch 10, wobei die Ressourcenstatusinformationen in einem Mittelteil oder einem Nachsatz des Freigegeben-zum-Senden-Frames sind.

12. Verfahren nach Anspruch 9, wobei das Empfangen, durch einen Zugangspunkt, von Ressourcenstatusinformationen, die durch eine Station (102, 60) gesendet werden, aufweist:
Empfangen, durch den Zugangspunkt (101, 20), eines Freigegeben-zum-Senden-Frames und eines angehängten orthogonalen Frequenzmultiplex OFDM Symbols, das an das Freigegeben-zum-Senden-Frame angehängt ist, die durch die Station gesendet werden, wobei das angehängte OFDM Symbol die Ressourcenstatusinformationen trägt.

13. Verfahren zum Übertragen von Informationen unter Verwendung eines drahtlosen Lokalnetzwerks, wobei eine OFDMA Zeitfrequenzkanalressource des drahtlosen Lokalnetzwerks in mehrere Kinderressourcen in einer Frequenzdomäne unterteilt ist, wobei die Kinderressourcen orthogonalen Zeitfrequenzressourcenblöcken oder Ressourcenblockgruppen entsprechen, wobei Ressourcenblöcke in Frequenz orthogonal sind und zeitlich geteilt werden können, und das Verfahren aufweist:
Ermitteln, durch eine Station (102, 60), von Ressourcenstatusinformationen, wobei die Ressourcenstatusinformationen einen beschäftigten/freien Zustand jeder der Kinderressourcen auf der Station anzeigen; und
Senden, durch die Station (102, 60), der Ressourcenstatusinformationen an einen Zugangspunkt, sodass der Zugangspunkt gemäß den Ressourcenstatusinformationen die Kinderressource zuweist, die verwendet wird, Daten zwischen dem Zugangspunkt und der Station zu übertragen,
wobei vor dem Ermitteln, durch eine Station, von Ressourcenstatusinformationen, das Verfahren ferner aufweist:
Empfangen, durch die Station (102, 60), von Konfigurationsinformationen, die von den Ressourcenstatusinformationen sind und vom Zugangspunkt (101, 20) gesendet werden, wobei die Konfigurationsinformationen Ressourcenblockgruppengranularität-Anzeigeinformationen enthalten, wobei die Ressourcenblockgruppengranularität-Anzeigeinformationen die Zahl an Ressourcenblöcken anzeigen, die in einer Ressourcenblockgruppe enthalten sind, wobei die Konfigurationsinformationen verwendet werden, der Station (102, 60) zu befehlen, die Ressourcenstatusinformationen gemäß den Konfigurationsinformationen zu ermitteln.

14. Verfahren nach Anspruch 13, wobei das Senden, durch die Station (102, 60), der Ressourcenstatusinformationen an den Zugangspunkt (101, 20) aufweist:
Senden, durch die Station (102, 60), eines Freigegeben-zum-Senden-Frames an den Zugangspunkt (101, 20), wobei das Freigegeben-zum-Senden-Frame die Ressourcenstatusinformationen trägt.

15. Verfahren nach Anspruch 14, wobei die Ressourcenstatusinformationen in einem Mittelteil oder einem Nachsatz des Freigegeben-zum-Senden-Frames sind.

16. Verfahren nach Anspruch 13, wobei das Senden, durch die Station (102, 60), der Ressourcenstatusinformationen an den Zugangspunkt (101, 20) aufweist:
Senden, durch die Station (102, 60), eines Freigegeben-zum-Senden-Frames und eines angehängten orthogonalen Frequenzmultiplex OFDM Symbols, das an das Freigegeben-zum-Senden-Frame angehängt ist, an den Zugangspunkt, wobei das angehängte OFDM Symbol die Ressourcenstatusinformationen trägt.

## Revendications

1. Point d'accès (101, 20) de réseau local sans fil, une ressource de canal temps-fréquence OFDMA du réseau local sans fil étant divisée en de multiples ressources enfants dans un domaine de fréquence, lesdites ressources enfants correspondant à des blocs de ressources ou des groupes de blocs de ressources temps-fréquence orthogonaux, les blocs de ressources étant orthogonaux en fréquence et pouvant être partagés dans le temps, et le point d'accès (101, 20) comprenant :
une unité de réception (21) conçue pour recevoir des informations de statut de ressources envoyées par une station (102, 60), dans lequel les informations de statut de ressources indiquent un état occupé/libre de chacune des ressources enfants sur la station (102, 60) ;
une unité d'attribution (22) conçue pour attribuer, en fonction des informations de statut de ressources, la ressource enfant utilisée pour transmettre des données entre le point d'accès (101, 20) et la station (102, 60) ; et
une unité d'envoi (23) conçue pour envoyer les informations de configuration des informations de statut de ressources à la station (102, 60), lesdites informations de configuration comprenant des informations d'indication de granularité de groupe de blocs de ressources, dans lequel les informations d'indication de granularité de groupe de blocs de ressources indiquent le nombre de blocs de ressources compris dans un groupe de blocs de ressources, dans lequel les informations de configuration sont utilisées pour ordonner à la station (102, 60) de déterminer les informations de statut de ressources en fonction des informations de configuration.

2. Point d'accès (101, 20) selon la revendication 1, dans lequel l'unité de réception (21) est spécifiquement conçue pour recevoir une trame bonne-pour-envoi envoyée par la station (102, 60), et la trame bonne-pour-envoi comprend les informations de statut de ressources.

3. Point d'accès (101, 20) selon la revendication 2, dans lequel les informations de statut de ressources transportées dans la trame bonne-pour-envoi reçue par l'unité de réception (21) sont dans une partie médiane ou une queue de la trame bonne-pour-envoi.

4. Point d'accès (101, 20) selon la revendication 1, dans lequel l'unité de réception (21) est spécifiquement conçue pour recevoir une trame bonne-pour-envoi et un symbole OFDM de multiplexage par division de fréquence orthogonale rattaché à la trame bonne-pour-envoi qui sont envoyés par la station, et le symbole OFDM rattaché comprend les informations de statut de ressources.

5. Station (102, 60) d'un réseau local sans fil, une ressource de canal temps-fréquence OFDMA du réseau local sans fil étant divisée en de multiples ressources enfants dans un domaine de fréquence, lesdites ressources enfants correspondant à des blocs de ressources ou des groupes de blocs de ressources temps-fréquence orthogonaux, les blocs de ressources étant orthogonaux en fréquence et pouvant être partagés dans le temps, et la station (102, 60) comprenant :
une unité de détermination (61) conçue pour déterminer des informations de statut de ressources, dans laquelle les informations de statut de ressources indiquent un état occupé/libre de chacune des ressources enfants sur la station (102, 60) ;
une unité d'envoi (62) conçue pour envoyer les informations de statut de ressources à un point d'accès (101, 20) de sorte que le point d'accès (101, 20) attribue, en fonction des informations de statut de ressources, la ressource enfant utilisée pour transmettre des données entre le point d'accès (101, 20) et la station (102, 60) ; et
une unité de réception (63) conçue pour recevoir des informations de configuration qui concernent les informations de statut de ressources et qui sont envoyées par le point d'accès (101, 20), lesdites informations de configuration comprenant des informations d'indication de granularité de groupe de blocs de ressources, dans laquelle les informations d'indication de granularité de groupe de blocs de ressources indiquent le nombre de blocs de ressources compris dans un groupe de blocs de ressources, dans laquelle les informations de configuration sont utilisées pour ordonner à la station (102, 60) de déterminer les informations de statut de ressources en fonction des informations de configuration.

6. Station (102, 60) selon la revendication 5, dans laquelle l'unité d'envoi (62) est spécifiquement conçue pour envoyer une trame bonne-pour-envoi au point d'accès, et la trame bonne-pour-envoi comprend les informations de statut de ressources.

7. Station (102, 60) selon la revendication 6, dans laquelle les informations de statut de ressources comprises dans la trame bonne-pour-envoi envoyée par l'unité d'envoi sont dans une partie médiane ou une queue de la trame bonne-pour-envoi.

8. Station (102, 60) selon la revendication 5, dans laquelle l'unité d'envoi (62) est spécifiquement conçue pour envoyer une trame bonne-pour-envoi et un symbole OFDM de multiplexage par division de fréquence orthogonale rattaché à la trame bonne-pour-envoi au point d'accès, et le symbole OFDM rattaché comprend les informations de statut de ressources.

9. Procédé pour transmettre des informations en utilisant un réseau local sans fil, une ressource de canal temps fréquence OFDMA du réseau local sans fil étant divisée en de multiples ressources enfants dans un domaine de fréquence, lesdites ressources enfants correspondant à des blocs de ressources ou des groupes de blocs de ressources temps-fréquence orthogonaux, les blocs de ressources étant orthogonaux en fréquence et pouvant être partagés dans le temps, et le procédé consistant à :
recevoir, avec un point d'accès (101, 20), des informations de statut de ressources envoyées par une station (102, 60), dans lequel les informations de statut de ressources indiquent un état occupé/libre de chacune des ressources enfants sur la station (102, 60) ; et
attribuer, avec le point d'accès (101, 20) en fonction des informations de statut de ressources, la ressource enfant utilisée pour transmettre des données entre le point d'accès et la station ;
avant de recevoir, avec un point d'accès, des informations de statut de ressources envoyées par une station (102, 60), le procédé consistant en outre à :
envoyer, avec le point d'accès (101, 20), des informations de configuration des informations de statut de ressources à la station (102, 60), lesdites informations de configuration comprenant des informations d'indication de granularité de groupe de blocs de ressources, dans lequel les informations d'indication de granularité de groupe de blocs de ressources indiquent le nombre de blocs de ressources compris dans un groupe de blocs de ressources, dans lequel les informations de configuration sont utilisées pour ordonner à la station (102, 60) de déterminer les informations de statut de ressources en fonction des informations de configuration.

10. Procédé selon la revendication 9, dans lequel la réception, avec un point d'accès (101, 20), des informations de statut de ressources envoyées par une station (102, 60) consiste à :
recevoir, avec le point d'accès (101, 20), une trame bonne-pour-envoi envoyée par la station (102, 60), dans lequel la trame bonne-pour-envoi comprend les informations de statut de ressources.

11. Procédé selon la revendication 10, dans lequel les informations de statut de ressources sont dans une partie médiane ou une queue de la trame bonne-pour-envoi.

12. Procédé selon la revendication 9, dans lequel la réception, avec un point d'accès, des informations de statut de ressources envoyées par une station (102, 60), consiste à :
recevoir, avec le point d'accès (101, 20), une trame bonne-pour-envoi et un symbole OFDM de multiplexage par division de fréquence orthogonale rattaché à la trame bonne-pour-envoi qui sont envoyés par la station, dans lequel le symbole OFDM rattaché comprend les informations de statut de ressources.

13. Procédé pour transmettre des informations en utilisant un réseau local sans fil, une ressource de canal temps fréquence OFDMA du réseau local sans fil étant divisée en de multiples ressources enfants dans un domaine de fréquence, lesdites ressources enfants correspondant à des blocs de ressources ou des groupes de blocs de ressources temps-fréquence orthogonaux, les blocs de ressources étant orthogonaux en fréquence et pouvant être partagés dans le temps, et le procédé consistant à :
déterminer, avec une station (102, 60), des informations de statut de ressources, dans lequel les informations de statut de ressources indiquent un état occupé/libre de chacune des ressources enfants sur la station ; et
envoyer, avec la station (102, 60), les informations de statut de ressources à un point d'accès de sorte que le point d'accès attribue, en fonction des informations de statut de ressources, la ressource enfant utilisée pour transmettre des données entre le point d'accès et la station ;
avant de déterminer, avec une station, des informations de statut de ressources, le procédé consistant en outre à :
recevoir, avec la station (102, 60), des informations de configuration qui concernent les informations de statut de ressources et qui sont envoyées par le point d'accès (101, 20), lesdites informations de configuration comprenant des informations d'indication de granularité de groupe de blocs de ressources, dans lequel les informations d'indication de granularité de groupe de blocs de ressources indiquent le nombre de blocs de ressources compris dans un groupe de blocs de ressources, dans lequel les informations de configuration sont utilisées pour ordonner à la station (102, 60) de déterminer les informations de statut de ressources en fonction des informations de configuration.

14. Procédé selon la revendication 13, dans lequel l'envoi, par la station (102, 60) des informations de statut de ressources au point d'accès (101, 20) consiste à :
envoyer, avec la station (102, 60), une trame bonne-pour-envoi au point d'accès (101, 20), dans lequel la trame bonne-pour-envoi comprend les informations de statut de ressources.

15. Procédé selon la revendication 14, dans lequel les informations de statut de ressources sont dans une partie médiane ou une queue de la trame bonne-pour-envoi.

16. Procédé selon la revendication 13, dans lequel l'envoi, par la station (102, 60) des informations de statut de ressources au point d'accès (101, 20) consiste à :
envoyer, avec la station (102, 60), une trame bonne-pour-envoi et un symbole OFDM de multiplexage par division de fréquence orthogonale rattaché à la trame bonne-pour-envoi au point d'accès, dans lequel le symbole OFDM rattaché comprend les informations de statut de ressources.
